# FASCICULE DE BREVET EUROPEEN

(11) **EP 4 217 131 B1**
(45) Date de publication et mention de la délivrance du brevet: **31.12.2025**
(21) Numéro de dépôt: 21793982.6
(22) Date de dépôt: 22.09.2021
(51) Int. Cl.: B21J 15/02, B21J 15/14, B21J 15/32, F16B 19/08, F16B 41/00

(54) **PIECE MECANIQUE A ELEMENT DE FIXATION TRAVERSANT PRE-INTEGRE**
MECHANISCHES TEIL MIT VORINTEGRIERTEM DURCHSTECKBEFESTIGUNGSELEMENT
MECHANICAL PART WITH PRE-INTEGRATED THROUGH-FASTENING ELEMENT

(30) Priorité: 24.09.2020 FR 2009732
(43) Date de publication de la demande: 02.08.2023
(73) Titulaire: SAFRAN AIRCRAFT ENGINES, 75015 Paris (FR)
(72) Inventeur: ROUSSEAU, Claire Hélène, 77550 Moissy-Cramayel (FR); GOOSSENS, Eric Joseph, 77550 Moissy-Cramayel (FR); VIAL, Matthieu, 77550 Moissy-Cramayel (FR)
(74) Mandataire: Santarelli
(86) Numéro de dépôt international: PCT/FR2021/051622
(87) Numéro de publication internationale: WO 2022/064137

(56) Documents cités:
- EP-A1- 2 853 816
- EP-B1- 2 853 816
- DE-C1- 4 310 002
- US-A- 5 395 194
- US-A- 5 395 194
- US-A- 5 743 692
- US-A1- 2015 023 756

## Description

### DOMAINE TECHNIQUE

La présente invention concerne une pièce mécanique, ainsi qu'un procédé de fabrication d'une telle pièce mécanique et un procédé d'assemblage d'une telle pièce mécanique à une autre pièce mécanique.

### ÉTAT DE LA TECHNIQUE ANTÉRIEURE

Dans de nombreux domaines de la mécanique, des pièces sont assemblées au moyen d'éléments de fixation traversants tels que des rivets ou des boulons. Ces éléments de fixation sont rapportés au cours d'opérations d'assemblage des pièces les unes aux autres.

Cette manière de procéder requiert donc la mise à disposition préalable d'ensembles de tels éléments de fixation, ce qui nécessite une prise en compte spécifique dans la chaîne logistique.

De plus, cette manière de procéder engendre des risques d'erreurs de montage, ainsi que des risques de pertes d'éléments de fixation dans l'enceinte ou le local de montage, d'où il peut résulter des risques d'endommagement, mais également des risques d'augmentation de masse, ce qui peut être particulièrement pénalisant dans certains contextes, par exemple dans le cas d'opérations concernant les aéronefs.

Les documents US 5 395 194 A, DE 43 10 002 C1 et US 2015/023756 A1 montrent tous une pièce mécanique comprenant un corps de pièce pourvu d'un orifice traversant ainsi qu'un élément de fixation traversant comportant une tige engagée dans l'orifice traversant. Le document US 5 743 692 A montre aussi une telle pièce mécanique et forme la base du préambule de la revendication 1.

### EXPOSE DE L'INVENTION

L'invention a pour but d'apporter une solution simple, économique et efficace à ce problème.

Elle propose à cet effet une pièce mécanique, comprenant un corps de pièce pourvu d'un orifice traversant, et comprenant un élément de fixation traversant comportant une tige engagée dans l'orifice traversant et reliée à une surface interne de l'orifice traversant par un support fixé à la tige de l'élément de fixation traversant et à la surface interne de l'orifice traversant, et configuré pour rompre la liaison entre la tige de l'élément de fixation traversant et la surface interne de l'orifice traversant en se cassant ou en se détachant de la tige et de la surface interne de l'orifice traversant, sous l'effet d'une poussée appliquée sur l'élément de fixation traversant de manière à pousser la tige de ce dernier dans l'orifice traversant.

Du fait que l'élément de fixation traversant est ainsi pré-intégré dans son orifice traversant au sein de la pièce mécanique, la gestion logistique préalable à l'assemblage de la pièce mécanique à une autre pièce mécanique au moyen de l'élément de fixation traversant est simplifiée. De plus, le risque d'erreur est réduit pour les opérateurs, de même que le risque de perte de l'élément de fixation.

Bien entendu, la pièce mécanique peut comporter une pluralité d'orifices traversants et une pluralité d'éléments de fixation correspondants pré-intégrés dans ces orifices de la manière indiquée ci-dessus. Les dispositions facultatives détaillées dans ce qui suit peuvent dans ce cas s'appliquer pour tout ou partie de l'ensemble de ces éléments de fixation.

De plus, il peut y avoir plusieurs supports pour un même élément de fixation traversant. Les dispositions facultatives détaillées dans ce qui suit peuvent dans ce cas s'appliquer à tous les supports ou à certains supports, pour un élément de fixation donné.

Dans un mode de réalisation préféré de l'invention, l'élément de fixation traversant est un rivet ou une tige filetée.

De préférence, le support est fixé à une surface latérale de la tige de l'élément de fixation traversant.

L'invention concerne en outre un ensemble propulsif pour aéronef comportant une pièce mécanique du type décrit ci-dessus.

L'invention concerne aussi un aéronef comportant une pièce mécanique du type décrit ci-dessus.

L'invention concerne également un procédé pour fabriquer une pièce mécanique du type décrit ci-dessus, comprenant la fabrication du corps de pièce, de l'élément de fixation traversant, et du support, par une technique de fabrication additive.

Les techniques de fabrication additive permettent en effet de fabriquer l'ensemble des éléments précités, d'une manière particulièrement simple.

L'invention concerne aussi un procédé pour assembler une pièce mécanique du type décrit ci-dessus à une autre pièce mécanique, dans lequel l'autre pièce mécanique comprend un autre corps de pièce pourvu d'un autre orifice traversant, le procédé comprenant les étapes suivantes :
A) positionner la pièce mécanique et l'autre pièce mécanique de manière à aligner l'orifice traversant de la pièce mécanique avec l'autre orifice traversant de l'autre pièce mécanique ; puis
B) appliquer une poussée sur l'élément de fixation traversant, de manière à casser le support ou à détacher ce dernier de la tige et de la surface interne de l'orifice traversant, et à rompre ainsi la liaison entre la tige de l'élément de fixation traversant et la surface interne de l'orifice traversant, et à pousser la tige de l'élément de fixation traversant dans l'orifice traversant et dans l'autre orifice traversant ; puis
C) fixer la pièce mécanique à l'autre pièce mécanique au moyen de l'élément de fixation traversant.

De préférence, l'élément de fixation traversant est un rivet ou une tige filetée, et la poussée de l'étape B est appliquée sur une tête de l'élément de fixation traversant.

Dans le cas où l'élément de fixation traversant est un rivet, l'étape C est une opération de rivetage.

Dans le cas où l'élément de fixation traversant est une tige filetée, l'étape C comprend le serrage d'un écrou sur une extrémité de l'élément de fixation traversant opposée à la tête de ce dernier. Autrement dit, l'étape C est dans ce cas une opération de boulonnage.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
La figure 1 est une vue schématique d'une pièce mécanique selon un mode de réalisation préféré de l'invention, en coupe selon le plan I-I de la figure 2 ;
La figure 2 est une vue schématique de la pièce mécanique de la figure 1, en coupe selon le plan II-II de la figure 1;
La figure 3 est une vue semblable à la figure 1, montrant la pièce mécanique de la figure 1 et une autre pièce mécanique, au cours de la mise en œuvre d'un procédé d'assemblage selon un mode de réalisation préféré de l'invention ;
La figure 4 est une vue semblable à la figure 3, à l'issue de la mise en œuvre du procédé.

### EXPOSÉ DÉTAILLÉ DE MODES DE RÉALISATION PRÉFÉRÉS

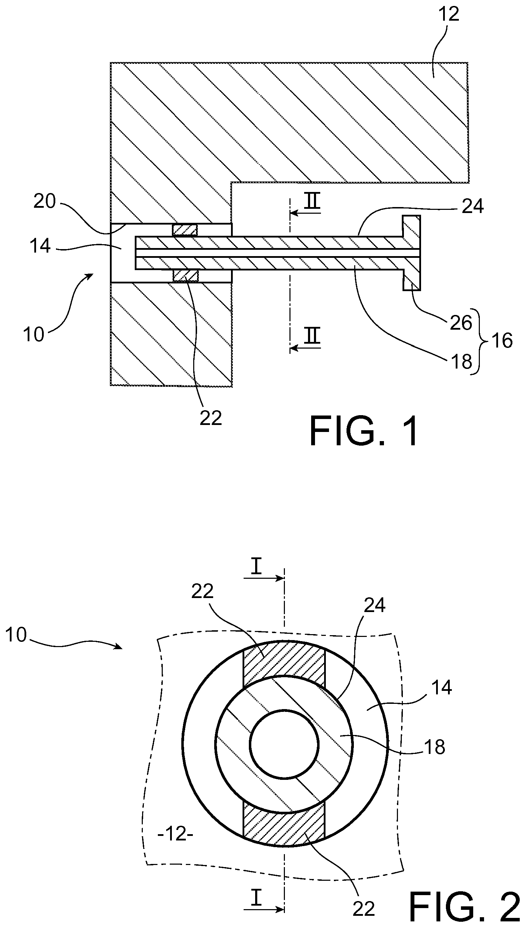

Les figures 1 et 2 illustrent une pièce mécanique 10, qui est par exemple destinée à entrer dans la constitution d'un ensemble propulsif pour aéronef ou d'un aéronef. Par exemple, la pièce mécanique 10 constitue une ferrure pour un plancher d'aéronef.

La pièce mécanique 10 comprend un corps de pièce 12 pourvu d'un orifice traversant 14 destiné à l'assemblage de la pièce 10 à une autre pièce mécanique par rivetage ou boulonnage, ou plus généralement par toute technique reposant sur l'utilisation d'éléments de fixation traversants.

Il est proposé, selon l'invention, que de tels éléments de fixation traversants soient pré-intégrés à la pièce mécanique 10 lors de la fabrication de cette dernière, cette fabrication étant de préférence mise en œuvre au moyen d'une technique de fabrication additive, par exemple par fusion laser sur lit de poudre.

La pièce mécanique 10 comprend ainsi en outre un élément de fixation traversant 16, qui comporte une tige 18 engagée dans un orifice traversant 14 correspondant. Il faut comprendre par là que la tige 18 s'étend sur une partie de la longueur de l'orifice traversant 14, comme cela apparaît sur la figure 1, ou, en variante, que la tige 18 traverse l'orifice traversant 14 de part en part.

Dans tous les cas, la tige 18 est reliée à une surface interne 20 de l'orifice traversant 14 par au moins un support 22 qui est fixé, d'une part, à la tige 18 de l'élément de fixation traversant, et d'autre part, à la surface interne 20 de l'orifice traversant.

Le support 22, ou le cas échéant, l'ensemble des supports 22 reliés à la tige 18, est configuré pour rompre la liaison entre la tige 18 de l'élément de fixation traversant et la surface interne 20 de l'orifice traversant, sous l'effet d'une poussée appliquée sur l'élément de fixation traversant 16 de manière à pousser la tige 18 de ce dernier dans l'orifice traversant 14.

Il faut ainsi comprendre que le support 22 est conçu et dimensionné au plus juste pour permettre le maintien en position de l'élément de fixation traversant 16 lors de la manutention de la pièce mécanique, et pour se casser, ou pour se détacher de la tige 18 et de la surface interne 20 de l'orifice traversant, lors de l'application, sur l'élément de fixation traversant 16, d'une force de poussée, par exemple un choc, qui soit d'un niveau adéquat pour pousser cet élément de fixation dans l'orifice sans pour autant endommager cet élément de fixation.

À cet effet, le support 22 est une structure relativement fine par rapport à l'élément de fixation traversant 16 et/ou une structure allégée telle qu'une structure alvéolaire.

Dans le cas préférentiel dans lequel la pièce mécanique 10 est réalisée par une technique de fabrication additive, le corps de pièce 12, l'élément de fixation traversant 16 et le support 22 (ou l'ensemble des supports 22) peuvent être formés d'un seul tenant dans un même matériau. En variante, des matériaux différents peuvent être respectivement utilisés pour constituer ces éléments.

Le support 22 est de préférence raccordé à une surface latérale 24 de la tige 18 de l'élément de fixation traversant. Dans le cas préférentiel dans lequel la pièce mécanique 10 est réalisée par une technique de fabrication additive, il faut comprendre par là que le support 22 forme une structure en saillie sur ladite surface latérale 24.

Dans l'exemple illustré, la tige 18 de l'élément de fixation traversant visible sur les figures 1 et 2 est reliée à la surface interne 20 de l'orifice traversant correspondant par deux supports 22 du type décrit ci-dessus, qui sont diamétralement opposés par rapport à un axe longitudinal de l'orifice traversant 14.

De plus, dans l'exemple illustré, l'élément de fixation traversant 16 est un rivet, prévu pour un assemblage par rivetage. En variante, l'élément de fixation traversant 16 peut être une tige filetée, pour un assemblage par boulonnage. Dans les deux cas, l'élément de fixation traversant 16 comporte donc une tête 26 agencée à une extrémité de la tige 18 de l'élément.

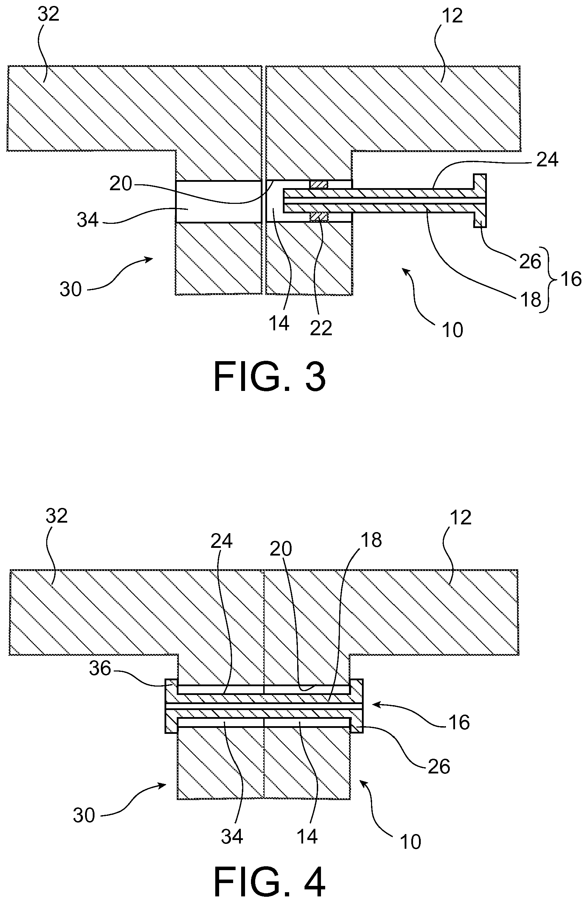

En référence aux figures 3 et 4, la pièce mécanique 10 peut être assemblée à une autre pièce mécanique 30, comprenant un autre corps de pièce 32 pourvu d'un autre orifice traversant 34, au moyen d'un procédé d'assemblage comprenant les étapes suivantes :
A) positionner la pièce mécanique 10 et l'autre pièce mécanique 30 de manière à aligner l'orifice traversant 14 de la pièce mécanique 10 avec l'autre orifice traversant 34 de l'autre pièce mécanique 30 ; puis
B) appliquer une poussée, par exemple un choc, sur l'élément de fixation traversant 16, en l'occurrence sur la tête 26 de celui-ci, de manière à casser le(s) support(s) 22 ou à détacher ce(s) dernier(s) de la tige 18 et de la surface interne 20 de l'orifice traversant, et à rompre ainsi la liaison entre la tige 18 de l'élément de fixation traversant 16 et la surface interne 20 de l'orifice traversant 14, préalablement assurée par le(s) support(s) 22, et pousser la tige 18 de l'élément de fixation traversant 16 dans l'orifice traversant 14 et dans l'autre orifice traversant 34 (figure 3) ; puis
C) fixer la pièce mécanique 10 à l'autre pièce mécanique 30 au moyen de l'élément de fixation traversant 16 (figure 4).

Dans l'exemple illustré, dans lequel l'élément de fixation traversant 16 est un rivet, l'étape C est une opération de rivetage consistant, de manière générale, à élargie l'extrémité de la tige 18 opposée à la tête 26 par écrasement de manière à former une seconde tête 36 permettant un serrage réciproque des pièces mécaniques 10 et 30.

En variante, dans le cas où l'élément de fixation traversant 16 est une tige filetée, l'étape C comprend le serrage d'un écrou sur une extrémité de l'élément de fixation traversant 16 opposée à la tête 26 de ce dernier, de manière là aussi à obtenir un serrage réciproque des pièces mécaniques 10 et 30.

D'une manière générale, le fait de pré-intégrer l'élément de fixation 16 à la pièce mécanique 10 permet de simplifier considérablement la gestion logistique, jusqu'à l'assemblage de la pièce mécanique à une autre pièce mécanique au moyen de l'élément de fixation traversant 16, tout en réduisant le risque d'erreur pour les opérateurs ainsi que le risque de perte d'élément de fixation.

Dans l'ensemble de la description et des revendications, sauf lorsqu'il en est stipulé autrement ou lorsque des raisons techniques évidentes y font obstacle, l'utilisation des articles singuliers indéfinis « un » ou « une » et définis « le » ou « la » en ce qui concerne un élément donné ou une étape donnée n'exclut pas la possibilité qu'il puisse exister une pluralité de tels éléments ou étapes.

En particulier, la pièce mécanique 10 peut bien entendu comporter plusieurs orifices traversants et plusieurs éléments de fixation traversants correspondants, pré-intégrés à la pièce mécanique 10 selon les modalités décrites ci-dessus, pour permettre l'assemblage de la pièce mécanique 10 à une ou plusieurs autres pièces mécaniques.

## Revendications

1. Pièce mécanique (10), comprenant un corps de pièce (12) pourvu d'un orifice traversant (14), ladite pièce mécanique comprenant un élément de fixation traversant (16) comportant une tige (18) engagée dans l'orifice traversant (14) et reliée à une surface interne (20) de l'orifice traversant (14) par un support (22) fixé à la tige (18) de l'élément de fixation traversant (16) et à la surface interne (20) de l'orifice traversant (14) et **caractérisée en ce que** ledit support (22) est configuré pour rompre la liaison entre la tige (18) de l'élément de fixation traversant (16) et la surface interne (20) de l'orifice traversant (14), en se cassant ou en se détachant de la tige (18) et de la surface interne (20) de l'orifice traversant, sous l'effet d'une poussée appliquée sur l'élément de fixation traversant (16) de manière à pousser la tige (18) de ce dernier dans l'orifice traversant (14).

2. Pièce mécanique selon la revendication 1, dans laquelle l'élément de fixation traversant (16) est un rivet ou une tige filetée.

3. Pièce mécanique selon la revendication 1 ou 2, dans laquelle le support (22) est raccordé à une surface latérale (24) de la tige (18) de l'élément de fixation traversant (16).

4. Ensemble propulsif pour aéronef, comportant une pièce mécanique (10) selon l'une quelconque des revendications 1 à 3.

5. Aéronef, comportant une pièce mécanique (10) selon l'une quelconque des revendications 1 à 3.

6. Procédé pour fabriquer une pièce mécanique (10) selon l'une quelconque des revendications 1 à 3, comprenant la fabrication du corps de pièce (12), de l'élément de fixation traversant (16), et du support (22), par une technique de fabrication additive.

7. Procédé pour assembler une pièce mécanique (10) selon l'une quelconque des revendications 1 à 3 à une autre pièce mécanique (30), dans lequel l'autre pièce mécanique (30) comprend un autre corps de pièce (32) pourvu d'un autre orifice traversant (34), le procédé comprenant les étapes suivantes :
A) positionner la pièce mécanique (10) et l'autre pièce mécanique (30) de manière à aligner l'orifice traversant (14) de la pièce mécanique (10) avec l'autre orifice traversant (34) de l'autre pièce mécanique (30) ; puis
B) appliquer une poussée sur l'élément de fixation traversant (16), de manière à casser le support (22) ou à détacher ce dernier de la tige (18) et de la surface interne (20) de l'orifice traversant, et à rompre ainsi la liaison entre la tige (18) de l'élément de fixation traversant (16) et la surface interne (20) de l'orifice traversant (14) et à pousser la tige (18) de l'élément de fixation traversant (16) dans l'orifice traversant (14) et dans l'autre orifice traversant (34) ; puis
C) fixer la pièce mécanique (10) à l'autre pièce mécanique (30) au moyen de l'élément de fixation traversant (16).

8. Procédé selon la revendication 7, dans lequel l'élément de fixation traversant (16) est un rivet ou une tige filetée, et dans lequel la poussée de l'étape B est appliquée sur une tête (26) de l'élément de fixation traversant (16).

9. Procédé selon la revendication 8, dans lequel l'élément de fixation traversant (16) est un rivet, et dans lequel l'étape C est une opération de rivetage.

10. Procédé selon la revendication 8, dans lequel l'élément de fixation traversant (16) est une tige filetée, et dans lequel l'étape C comprend le serrage d'un écrou sur une extrémité de l'élément de fixation traversant opposée à la tête (26) de ce dernier.

## Patentansprüche

1. Mechanisches Teil (10), umfassend einen Teilekörper (12), der mit einer Durchgangsöffnung (14) versehen ist, wobei das mechanische Teil ein Durchgangsbefestigungselement (16) umfasst, das einen Stab (18) aufweist, der in die Durchgangsöffnung (14) eingeführt und mit einer Innenfläche (20) der Durchgangsöffnung (14) durch einen Halter (22) verbunden ist, der an dem Stab (18) des Durchgangsbefestigungselements (16) und an der Innenfläche (20) der Durchgangsöffnung (14) befestigt ist, und **dadurch gekennzeichnet ist, dass** der Halter (22) so eingerichtet ist, dass die Verbindung zwischen dem Stab (18) des Durchgangsbefestigungselements (16) und der Innenfläche (20) der Durchgangsöffnung (14) durch Bruch oder Ablösung von dem Stab (18) und der Innenfläche (20) der Durchgangsöffnung unter der Wirkung eines auf das Durchgangsbefestigungselement (16) ausgeübten Drucks unterbrochen wird, so dass der Stab (18) des Durchgangsbefestigungselements in die Durchgangsöffnung (14) gedrückt wird.

2. Mechanisches Teil nach Anspruch 1, wobei das Durchgangsbefestigungselement (16) ein Niet oder eine Gewindestange ist.

3. Mechanisches Teil nach Anspruch 1 oder 2, wobei der Halter (22) mit einer Seitenfläche (24) des Stabs (18) des Durchgangsbefestigungselements (16) verbunden ist.

4. Antriebseinheit für Luftfahrzeuge, umfassend ein mechanisches Teil (10) nach einem der Ansprüche 1 bis 3.

5. Luftfahrzeug, umfassend ein mechanisches Teil (10) nach einem der Ansprüche 1 bis 3.

6. Verfahren zum Herstellen eines mechanischen Teils (10) nach einem der Ansprüche 1 bis 3, umfassend die Herstellung des Teilekörpers (12), des Durchgangsbefestigungselements (16) und des Halters (22) durch ein additives Fertigungsverfahren.

7. Verfahren zum Zusammenfügen eines mechanischen Teils (10) nach einem der Ansprüche 1 bis 3 mit einem anderen mechanischen Teil (30), wobei das andere mechanische Teil (30) einen anderen Teilekörper (32) mit einer anderen Durchgangsöffnung (34) umfasst, wobei das Verfahren die folgenden Schritte umfasst:
A) Positionieren des mechanischen Teils (10) und des anderen mechanischen Teils (30), so dass die Durchgangsöffnung (14) des mechanischen Teils (10) mit der anderen Durchgangsöffnung (34) des anderen mechanischen Teils (30) ausgerichtet ist; anschließend
B) Ausüben eines Druck auf das Durchgangsbefestigungselement (16), so dass der Halter (22) bricht oder sich von der Stange (18) und der Innenfläche (20) der Durchgangsöffnung löst, und so die Verbindung zwischen der Stange (18) des Durchgangsbefestigungselements (16) und der Innenfläche (20) der Durchgangsöffnung (14) aufbricht und die Stange (18) des Durchgangsbefestigungselements (16) in die Durchgangsöffnung (14) und in die andere Durchgangsöffnung (34) drückt; und anschließend
C) Befestigen des mechanischen Teils (10) mit dem Durchgangsbefestigungselement (16) am anderen mechanischen Teil (30).

8. Verfahren nach Anspruch 7, wobei das Durchgangsbefestigungselement (16) ein Niet oder eine Gewindestange ist, und wobei der Druck von Schritt B auf einen Kopf (26) des Durchgangsbefestigungselements (16) angewendet wird.

9. Verfahren nach Anspruch 8, wobei das Durchgangsbefestigungselement (16) ein Niet ist, und wobei Schritt C ein Nietvorgang ist.

10. Verfahren nach Anspruch 8, wobei das Durchgangsbefestigungselement (16) eine Gewindestange ist und wobei Schritt C das Anziehen einer Mutter an einem Ende des Durchgangsbefestigungselements gegenüber dessen Kopf (26) umfasst.

## Claims

1. Mechanical part (10), comprising a part body (12) provided with a through hole (14), said mechanical part comprising a through fastening element (16) comprising a rod (18) engaged in the through hole (14) and connected to an inner surface (20) of the through hole (14) by a support (22) attached to the rod (18) of the through fastening element (16) and to the inner surface (20) of the through hole (14) and **characterised in that** said support (22) is configured to break the connection between the rod (18) of the through fastening element (16) and the inner surface (20) of the through hole (14), by breaking or detaching from the rod (18) and the inner surface (20) of the through hole, under the effect of a thrust applied to the through fastening element (16) so as to push the rod (18) thereof into the through hole (14).

2. Mechanical part according to claim 1, wherein the through fastening element (16) is a rivet or a threaded rod.

3. Mechanical part according to claim 1 or 2, wherein the support (22) is connected to a lateral surface (24) of the rod (18) of the through fastening element (16).

4. Aircraft propulsion unit, comprising a mechanical part (10) according to any one of claims 1 to 3.

5. Aircraft, comprising a mechanical part (10) according to any one of claims 1 to 3.

6. Method for manufacturing a mechanical part (10) according to any one of claims 1 to 3, comprising manufacturing the part body (12), the through fastening element (16) and the support (22), by an additive manufacturing technique.

7. Method for assembling a mechanical part (10) according to any one of claims 1 to 3 on another mechanical part (30), wherein the other mechanical part (30) comprises another part body (32) provided with another through hole (34), the method comprising the following steps:
A) positioning the mechanical part (10) and the other mechanical part (30) so as to align the through hole (14) of the mechanical part (10) with the other through hole (34) of the other mechanical part (30); then
B) applying a thrust on the fastening element (16), so as to break the support (22) or detach the latter from the rod (18) and from the inner surface (20) of the through hole, and thereby break the connection between the rod (18) of the fastening element (16) and the inner surface (20) of the through hole (14) and push the rod (18) of the through fastening element (16) into the through hole (14) and into the other through hole (34); then
C) attach the mechanical part (10) to the other mechanical part (30) by means of the through fastening element (16).

8. Method according to claim 7, wherein the through fastening element (16) is a rivet or a threaded rod, and wherein the thrust of step B is applied to a head (26) of the through fastening element (16).

9. Method according to claim 8, wherein the through fastening element (16) is a rivet, and wherein step C is a riveting operation.

10. Method according to claim 8, wherein the through fastening element (16) is a threaded rod, and wherein step C comprises tightening a nut on an end of the fastening element opposite the head (26) thereof.
